# EUROPÄISCHE PATENTSCHRIFT

(11) **EP 2 602 879 B1**
(45) Veröffentlichungstag und Bekanntmachung des Hinweises auf die Patenterteilung: **08.11.2017**
(21) Anmeldenummer: 12401232.9
(22) Anmeldetag: 16.11.2012
(51) Int. Cl.: B60L 11/18, H01R 13/639

(54) **Verriegelungsvorrichtung für einen Ladestecker eines elektrisch betriebenen Kraftfahrzeugs**
Locking device for a charging connector of an electrically driven motor vehicle
Dispositif de verrouillage pour un connecteur de charge d'un véhicule automobile électrique

(30) Priorität: 07.12.2011 DE 102011056130
(43) Veröffentlichungstag der Anmeldung: 12.06.2013
(73) Patentinhaber: Huf Hülsbeck & Fürst GmbH & Co. KG, 42551 Velbert (DE)
(72) Erfinder: Gorenzweig, Igor, 42109 Wuppertal (DE); Mönig, Stefan, 58332 Schwelm (DE)

(56) Entgegenhaltungen:
- WO-A1-2011/147593
- DE-A1-102009 043 845
- DE-U1-202008 014 548

## Beschreibung

Die Erfindung betrifft eine Verriegelungsvorrichtung für einen Ladestecker eines elektrisch angetriebenen Kraftfahrzeugs, welcher in eine am Kraftfahrzeug und/oder an einer Ladesäule angeordnete Ladesteckdose einsteckbar ist.

Aus dem Stand der Technik sind Verriegelungsvorrichtungen für einen Ladestecker eines elektrisch angetriebenen Kraftfahrzeugs bekannt, welcher in eine am Kraftfahrzeug oder an einer Ladesäule angeordnete Ladesteckdose einsteckbar ist. Das Gehäuse der Verriegelungsvorrichtung wird mit dem Gehäuse der Ladesteckdose verbunden. Zur Anbindung der Verriegelungsvorrichtung weist die Ladesteckdose eine Aufnahme auf. Das Gehäuse der Verriegelungsvorrichtung weist eine entsprechende Verbindungsstelle auf, welche integrierter Bestandteil des Gehäuses der Verriegelungsvorrichtung ist. Um die Verriegelungsvorrichtung mit der Ladesteckdose zu verheiraten, wird die Verbindungsstelle mit der Aufnahme sicher verbunden. Im Stand der Technik existieren allerdings verschiedene Ausführungsformen von Ladesteckdosen mit unterschiedlichen Ausgestaltungen von Aufnahmen, so dass zu jeder Aufnahme der Ladesteckdose auch eine entsprechende Verbindungsstelle der Verriegelungsvorrichtung gefertigt werden muss. Dabei muss das Gehäuse, insbesondere die Verbindungsstelle des Gehäuses der Verriegelungsvorrichtung in Abhängigkeit zu der Form der Aufnahme immer wieder neu konstruiert werden, um die Kompatibilität der beiden Bauteile zueinander und eine sichere Verbindung zu gewährleisten. Jede geringfügige Änderung des Gehäuses, insbesondere der Verbindungsstelle der Verriegelungsvorrichtung führt aber auch zu einer Änderung des Werkzeugs und bei einer hohen Variantenanzahl von Ladesteckdosen damit zu höheren Werkzeug- und Fertigungskosten für die Verriegelungsvorrichtung.

Aus dem Stand der Technik ist die DE102009043845A1 bekannt, welche eine alternative Lösung für eine Ladesteckerverriegelung offenbart, wobei das Adapterelement nicht am Gehäuse der Ladesteckerverriegelung angeordnet ist, sondern an einem als Bowdenzug ausgebildeten Kopplungselement. Daher ist es die Aufgabe der Erfindung, bei gleichzeitiger Verringerung der Fertigungskosten eine einfache Konstruktion der Verriegelungsvorrichtung bereitzustellen.

Die Aufgabe der Erfindung wird durch den kennzeichnenden Teil des Patentanspruchs 1 gelöst. Dabei ist der Verriegelungsvorrichtung ein Adapaterelement zugeordnet, welches die Verriegelungsvorrichtung mit der Ladesteckdose verbindet.

Durch diese Maßnahme gelingt es, die Fertigungskosten für Verriegelungsvorrichtung zu reduzieren. Durch die erfindungsgemäße Lösung muss nun lediglich ein Werkzeug zur Herstellung des Adapterelements bereitgestellt werden. Die Herstellungskosten für das Werkzeug des Adapterelements sind wesentlich geringer, weil es sich bei dem Adapaterelement um ein einfacheres und kompakteres Bauteil handelt als bei dem Gehäuse der Verriegelungsvorrichtung. In der Regel ist das Bauteilvolumen (Bauteilgröße) des Adapterelements um ein vielfaches geringer als bei dem Gehäuse des Verriegelungselements. Daher wird auch das für die Herstellung des Werkzeugs benötigte Material um ein vielfaches geringer sein. Die Praxis hat gezeigt, dass trotz der Vielzahl der Varianten von Ladesteckdosen die Kosten für die Vielzahl von Werkzeugen für die Adapaterelemente geringer sind als die Herstellungskosten für die hohe Anzahl von Werkzeugen für die Gehäuse der Verriegelungsvorrichtung. Von Vorteil ist auch, dass bei dem für das Adapterelement vorgesehenen Werkzeug die Schnittstelle zwischen dem Adapterelement und dem Gehäuse des Verriegelungselements immer gleich bleibt. Folglich muss das Werkzeug für das Adapterelement für jede Variante nur geringfügig in seiner Form, insbesondere ein Formnest des Werkzeugs, verändert werden.

Nach einer vorteilhaften Ausgestaltung der Verriegelungsvorrichtung ist vorgesehen, dass die Verriegelungsvorrichtung ein Gehäuse mit mindestens einer Öffnung aufweist, in welchem ein mechanisch und/oder elektrisch zu betätigendes Sperrglied zumindest teilweise angeordnet ist. Mit Hilfe des Sperrgliedes wird ein in die Ladesteckdose eingesteckter Ladestecker sicher verriegelt. Dafür kann der Ladestecker eine Öffnung aufweisen, die dazu dient das Sperrglied aufzunehmen Der Komfort wird für den Benutzer erhöht, wenn der Ladestecker elektrisch mittels eines Elektromotors bewegt wird. Selbstverständlich kann das Sperrglied auch mechanisch betätigt werden, beispielsweise durch einen an dem Sperrglied angeordneten Bowdenzug, welcher durch eine vorbestimmte mechanische Anordnung vom Benutzer betätigt werden kann.

Nach einer weiteren Ausgestaltung des Gegenstands der Erfindung ist vorgesehen, dass der Verriegelungsvorrichtung ein Elektromotor zugeordnet ist, welcher innerhalb des Gehäuses angeordnet ist und zum Antreiben des Sperrglieds dient. Der Elektromotor ist kompakt aufgebaut und lässt sich gut in das Gehäuse der Verriegelungsvorrichtung integrieren.

Um eine sichere Verbindung zwischen dem Gehäuse der Verriegelungsvorrichtung und dem Gehäuse der Ladesteckdose zu gewährleisten, ist es von Vorteil, wenn das Adapterelement kraftschlüssig und/oder formschlüssig und/oder stoffschlüssig mit einem Gehäuse des Ladesteckers und/oder mit dem Gehäuse der Verriegelungsvorrichtung verbunden wird. Die kraftschlüssige und formschlüssige Verbindung lässt sich beispielsweise sehr einfach mit Schraubelementen realisieren. Diese Art der Verbindung ist sicher und kostengünstig zugleich. Die formschlüssige Verbindung, insbesondere eine Nut-Feder-Verbindung, zeichnet sich dadurch aus, dass sich diese sehr einfach bei einem Austausch der Bauteile wieder lösen lässt. Als sehr robust hat sich die stoffschlüssige Verbindung erwiesen. Dazu eignet sich besonders das Laserschweißverfahren oder ein Verkleben mit einem Klebstoff. Die, insbesondere stoffschlüssige, Verbindung findet vorzugsweise bei der Verheiratung der Ladesteckdose mit der Verriegelungsvorrichtung statt. Selbstverständlich kann zuerst das Adapterelement mit der Verriegelungsvorrichtung oder der Ladesteckdose verbunden werden. Wenn der Lieferant des Adapterelements der Gleiche ist, wie der Lieferant der Verriegelungsvorrichtung, so bietet es sich aus logistischen und montagetechnischen Gründen an, diese als kompakte Baueinheit auszuliefern, um weiter die Logistikkosten zu senken.

Nach einer bevorzugten Ausführungsform der Erfindung ist vorgesehen, dass das Adapterelement mit dem Gehäuse des Ladesteckers und/oder des Gehäuses der Verriegelungsvorrichtung mit mindestens einer Schraube verschraubt wird. Diese Lösung bietet den Vorteil, dass eine an der Montagelinie angeordnete elektromechanische Montageeinheit, insbesondere eine automatische Elektroschraubmaschine die Verheiratung des Gehäuses der Ladesteckdose, des Gehäuses der Verriegelungsvorrichtung und des Adapterelements durchführen kann. Ferner lässt sich die Schraubverbindung wieder lösen, wenn die Verriegelungseinheit defekt ist, so dass ein einfacher Austausch einer defekten Montageeinheit leicht möglich ist.

Eine sichere Verbindung wird gewährleistet, wenn das Adapterelement und/oder das Gehäuse des Ladesteckers und/oder das Gehäuse der Verriegelungsvorrichtung jeweils zumindest zwei Gewindebohrungen aufweisen

Ein Lösen der Verbindung ist ausgeschlossen, wenn die Gewindebohrungen senkrecht und/oder parallel zu den Einstecköffnungen der Ladesteckdose angeordnet sind. Es findet somit eine gleichmäßige Kräfteverteilung statt, die eine stabile und sichere Verbindung gewährleistet. Ebenfalls ist durch diese Maßnahme eine sehr kompakte Bauform der Verriegelungsvorrichtung möglich. Vorzugsweise werden die Schrauben in die Gewindebohrungen des Adapterelements des Gehäuses der Verriegelungsvorrichtung und/oder des Gehäuses der Ladesteckdose geschraubt. Der Montageaufwand wird im Vergleich zum Stand der Technik nicht erhöht, weil das Adapterelement direkt mitverschraubt wird.

Eine sehr montagefreundliche Verbindung findet statt, wenn das Adapterelement mit dem Gehäuse des Ladesteckers und/oder des Gehäuses der Verriegelungsvorrichtung verklipst wird. Je nach Anforderung kann diese Rastverbindung lösbar oder unlösbar (lösbar nur durch Zerstörung der Bauteile) ausgebildet werden.

Nach einer weiteren Ausgestaltung des Gegenstands der Erfindung ist vorgesehen, dass das Adapterelement in eine Aufnahme, insbesondere Nut, des Gehäuses des Ladesteckers und/oder in eine Aufnahme, insbesondere Nut, des Gehäuses der Verriegelungsvorrichtung eingeschoben wird. Durch solch eine formschlüssige Nut-Feder-Verbindung lässt sich die Verriegelungsvorrichtung sehr einfach wieder von der Ladesteckdose entfernen, beispielsweise im Reparaturfall. Selbstverständlich kann das Adapterelement auch mittels einer Kombination aus Nut-Feder-Verbindung und Schraubverbindung an dem Gehäuse der Verriegelungsvorrichtung und/oder der Ladesteckdose verbunden werden.

Um das Adapterelement gegen ein Herausfallen aus der Nut weiter abzusichern, wird innerhalb der Nut eine Aufnahme vorgesehen, die bei eingeschobenen Adapterelement einen am Adapterelement angeordneten Haken aufnimmt. Damit ist sichergestellt, dass auch bei während der Fahrt des Fahrzeugs auftretenden Erschütterungen oder Bremsvorgängen ein Lösen des Adapterelements und somit auch der Verriegelungsvorrichtung ausgeschlossen ist.

Besonders fest und stabil ist die Verbindung zwischen dem Adapterelement und den entsprechenden Gehäusen, wenn das Adapterelement eine zur Nut im Wesentlichen komplementäre Fläche aufweist, welche mit der Nut einen Formschluss bildet. Dadurch wird ein Verrutschen des Adapterelements bei entstehenden Fahrbewegungen oder Bremsvorgängen ausgeschlossen. Es kann auch eine Presspassung zum Einsatz kommen, so dass die entsprechende Fläche des Adapterelements in die an dem jeweiligen Gehäuse angeordnete Nut eingeklemmt wird. Dabei kann die Nut eine Grundplatte des Adapterelements teilweise umschließen, um eine kraft- und formschlüssige Verbindung herzustellen.

Um eine einwandfreie Verriegelung des Ladesteckers sicherzustellen, ist vorgesehen, dass das Adapterelement eine Öffnung aufweist, welche zur Führung des Sperrglieds dient. Durch diese Zwangsführung ist es ausgeschlossen, dass das Sperrglied seitlich verrutschen kann. Umgekehrt sichert das Sperrglied durch die Zwangsführung ebenfalls das Adapterelement, falls sich das Adapterelement lösen oder lockern sollte.

Um die elektronischen Komponenten innerhalb des Gehäuses der Verriegelungsvorrichtung vor eintretender Feuchtigkeit und Straub zu schützen, ist dem Adapterelement und/oder dem Gehäuse der Verriegelungsvorrichtung mindestens ein Dichtelement zugeordnet, welches das Sperrglied zumindest teilweise umschließt.

Sehr einfach und kostengünstig ist die Verriegelungsvorrichtung zu realisieren, wenn das Dichtelement formschlüssig oder stoffschlüssig, insbesondere im 2K-Verfahren, an der Öffnung des Adapterelements und/oder einer Öffnung des Gehäuses der Verriegelungsvorrichtung zur Führung des Sperrglieds verbunden ist.

Wenn zusätzlich noch eine der Verriegelungsvorrichtung zugeordnete Notentriegelung dem Benutzer zur Verfügung gestellt werden soll und zu wenig Bauraum zur Verfügung steht, ist es von Vorteil, wenn das Adapterelement zur Führung eines Notentriegelungselements, insbesondere eines Bowdenzugs dient. Damit wird das Notentriegelungselement, insbesondere der Bowdenzug in die gewünschte Richtung ausgerichtet.

Nach einer weiteren bevorzugten Ausführungsform ist das Adapterelement am Sperrglied angeordnet, welcher insbesondere als Bolzen ausgebildet ist. Damit ist es möglich den Sperrbolzen mit einer zusätzlichen Mechanik, beispielsweise mit einem Kniehebel zu verbinden, welcher selbst einen Sperrbolzen aufweisen kann, der zur Verriegelung dient. Dies macht insbesondere dann Sinn, wenn zu wenig Bauraum zur Verfügung steht und der Abstand vom Sperrbolzen, welcher unmittelbar an der Verriegelungsvorrichtung angeordnet ist, zu groß zum zu verriegelnden Ladestecker ist.

Ladesteckdosen, welche die erfindungsgemäße Verriegelungsvorrichtung verwenden, eignen sich insbesondere für elektrisch angetriebene Kraftfahrzeuge.

Im Folgenden wird die Erfindung anhand von drei Ausführungsformen beschrieben. Die Figuren zeigen:
- Figur 1a: ein Adapterelement gemäß einer ersten Ausführungsform
- Figur 1b eine: Ladesteckdose gemäß der ersten Ausführungsform
- Figur 1c: eine Verriegelungsvorrichtung mit dem Adapterelement gemäß der ersten Ausführungsform
- Figur 1d: die mit dem Adapterelement verbundene Ladesteckdose gemäß der ersten Ausführungsform
- Figur 1e: die Verriegelungsvorrichtung, welche mit der Ladesteckdose mittels des Adapterelements verbunden ist gemäß der ersten Ausführungsform
- Figur 2a: ein Adapterelement gemäß einer zweiten Ausführungsform
- Figur 2b: eine Ladesteckdose gemäß der zweiten Ausführungsform
- Figur 2c: eine Verriegelungsvorrichtung mit dem Adapterelement gemäß der zweiten Ausführungsform
- Figur 2d: die mit dem Adapterelement verbundene Ladesteckdose gemäß der zweiten Ausführungsform
- Figur 2e: die Verriegelungsvorrichtung, welche mit der Ladesteckdose mittels des Adapterelements verbunden ist gemäß der zweiten Ausführungsform
- Figur 3a: ein Adapterelement gemäß einer dritten Ausführungsform
- Figur 3b: eine Ladesteckdose gemäß der dritten Ausführungsform
- Figur 3e: die Verriegelungsvorrichtung, welche mit der Ladesteckdose mittels des Adapterelements verbunden ist gemäß der dritten Ausführungsform
- Figur 4: eine nicht erfindungsgemäße Verriegelungsvorrichtung mit einem Adapterelement zur Führung eines Notenetriegelungselements und einem weiteren an einem Sperrglied angeordneten Adapterelement
- Figur 4a: die nicht erfindungsgemäße Verriegelungsvorrichtung mit dem am Sperrglied angeordneten Adapterelement in der Schnittdarstellung C-C
- Figur 5: die nicht erfindungsgemäße Verriegelungsvorrichtung mit einem uförmigen Adapterelement zur Führung eines Notenetriegelungselement

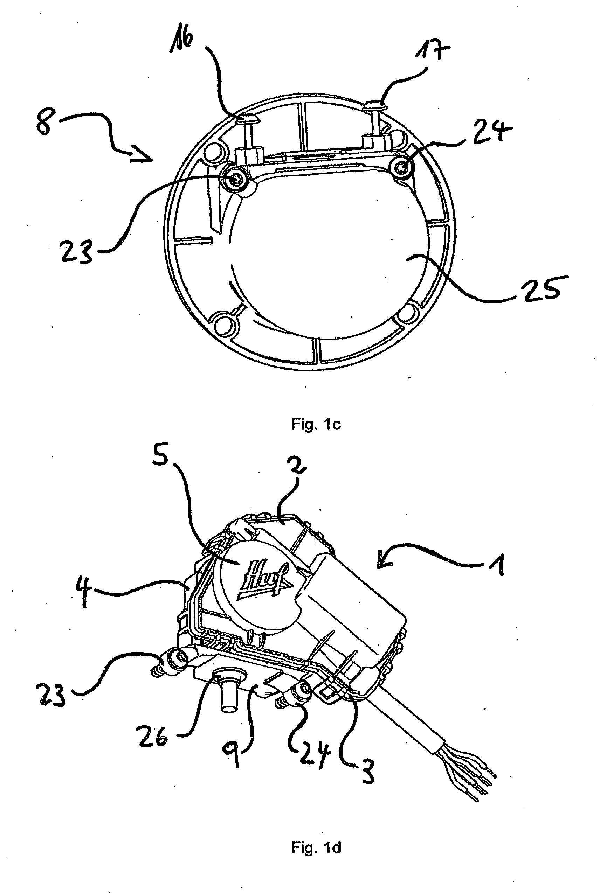

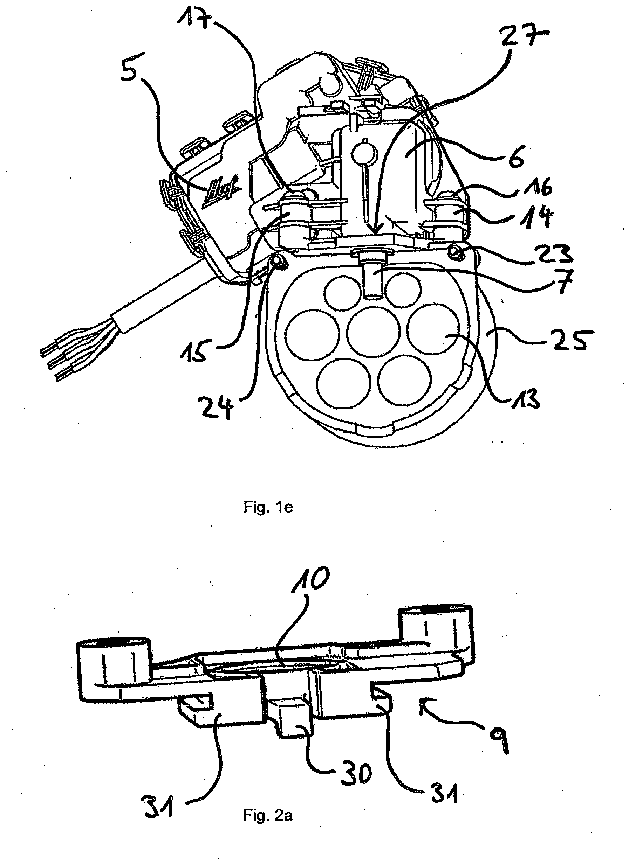

In der Figur 1d ist eine erste Ausführungsform der erfindungsgemäßen Verriegelungsvorrichtung 1 gezeigt, welche zur Verriegelung eines nicht näher dargestellten Ladesteckers dient, wobei der Ladestecker zum Aufladen eines elektrisch betriebenen Kraftfahrzeugs benutzt wird. Die Verriegelungsvorrichtung 1 weist ein zweiteiliges Gehäuse 2 auf, welches eine Oberschale 3 und eine Unterschale 4 umfasst, wobei die Oberschale 3 und die Unterschale 4 mittels einer Klipsverbindung dichtend gegen Staub und Feuchtigkeit miteinander verbunden sind. Auf dem Gehäuse 2, insbesondere auf der Oberschale 3 und der Unterschale 4 des Gehäuses 2, ist eine Kennzeichnungsfläche 5 bereitgestellt, auf der man eine Kennzeichnung aufbringen kann, welche beispielsweise den Hersteller angibt. Innerhalb des Gehäuses 2 ist ein Elektromotor 6 angeordnet, welcher zum Bewegen eines Sperrglieds 7 dient, wie in Figur 1e dargestellt. Das Sperrglied 7 wird dabei durch eine im Gehäuse 2 der Verriegelungsvorrichtung 1 angeordneten Öffnung 26 geführt. Alternativ könnte das Sperrglied 7 auch mechanisch, beispielsweise durch einen mit dem Sperrglied 7 in Wirkverbindung stehenden Bowdenzug manuell durch einen Benutzer betätigt werden. Die mechanische Betätigung des Sperrglieds 7 durch eine im Gehäuse 2 der Verriegelungsvorrichtung 1 angeordnete Öffnung 27 geführt. Alternativ könnte das Sperrglied 7 auch mechanisch, beispielsweise durch einen mit dem Sperrglied 7 in Wirkverbindung stehenden Bowdenzug manuell durch einen Benutzer betätigt werden. Die mechanische Betätigung des Sperrglieds 7 könnte auch im Rahmen einer Notbetätigung zum Einsatz kommen, wenn der Elektromotor 6 ausfällt.

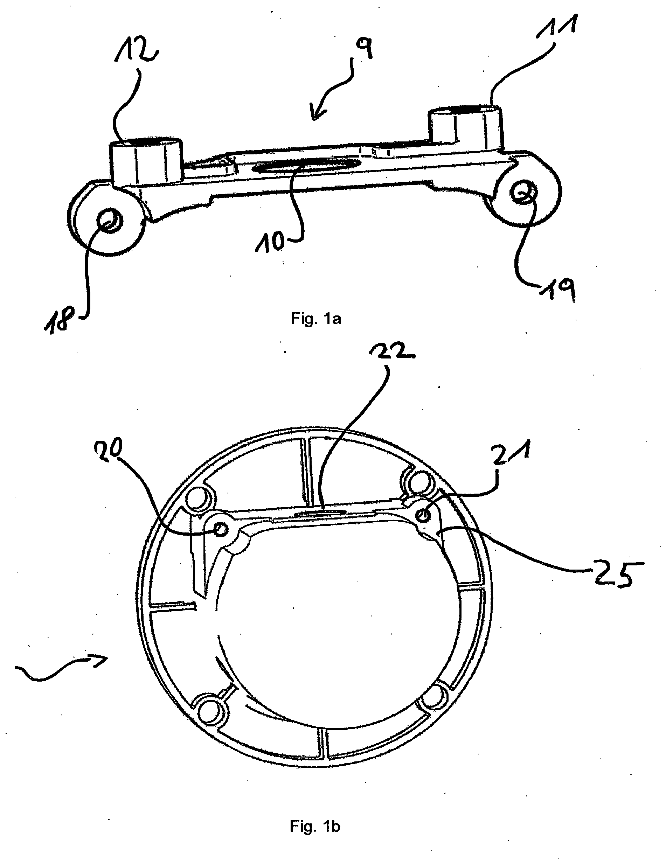

In den Figuren 1a, 1b und 1e ist eine Ladesteckdose 8 visualisiert, die an einem elektrisch betriebenen Kraftfahrzeug oder an einer Ladesäule angeordnet wird. Die Ladesteckdose 8 ist mittels eines der Verriegelungsvorrichtung 1 zugeordneten Adapterelements 9 mit dem Gehäuse 2 verbunden. Das Adapterelement 9 gemäß der ersten Ausführungsform ist in Figur 1 a vergrößert dargestellt. Das Adapterelement 9 weist eine Öffnung 10 auf, die u. a. zur Zwangsführung des Sperrglieds 7 dient. Darüber hinaus sind dem Adapterelement 9 eine erste Gewindebohrungen 11 und eine zweite Gewindebohrung 12 zugeordnet, die im verbauten Zustand (siehe Figur 1e) im Wesentlichen senkrecht zu den Einstecköffnungen 13 der Ladesteckdose 8 mit einem Gehäuse 25 angeordnet sind, wobei die Einstecköffnungen 13 der Ladesteckdose 8 zur elektrischen Aufnahme des Ladesteckers dienen. Die Verriegelungsvorrichtung 1 weist ebenfalls zwei Gewindebohrungen 14, 15 auf. Mit Hilfe von zwei Schrauben 16, 17 wird die Verriegelungsvorrichtung 1, insbesondere das Gehäuse 2 der Verriegelungsvorrichtung 1 verschraubt, so das eine kraft- und formschlüssige Verbindung zwischen dem Adapterelement 9 und dem Gehäuse 2 der Verriegelungsvorrichtung 1 entsteht. Ferner weist das Adapterelement 9 in der Figur 1 a eine dritte Gewindebohrung 18 und eine vierte Gewindebohrung 19 auf, welche senkrecht zur ersten Gewindebohrung 11 und zweiten Gewindebohrung 12 angeordnet sind. Wie in Figur 1b gezeigt, ist die Ladesteckdose 8 von hinten gezeigt. Die Ladesteckdose 8 umfasst zwei Gewindebohrungen 20, 21 die zur Befestigung des Adapterelements 9 dienen. Die Gewindebohrungen 20, 21 der Ladesteckdose 8 sind senkrecht zu einer Öffnung 22 angeordnet, welche zur Durchführung des Sperrglieds 7 dient. Um das Adapterelement 9 mit der Ladesteckdose zu verbinden, werden nun zwei Schrauben 23, 24 verwendet, welche jeweils in die Gewindebohrungen 20, 21 der Ladesteckdose 8 und in die dritte und vierte Gewindebohrungen 18, 19 des Adapterelements 9 hinein geschraubt werden. Wenn alle vier Schrauben 16, 17, 23, 24 fest angezogen sind, ist das Verriegelungselement 1 sicher über das Adapterelement 9 mit der Ladesteckdose 8 kraftschlüssig und formschlüssig verbunden. Es sei noch erwähnt, dass an den Berührungsstellen zwischen dem Adapterelement 9 mit dem Gehäuse 2 der Verriegelungsvorrichtung 1 und dem Gehäuse 25 der Ladesteckdose 8 die Flächen komplementär zueinander ausgebildet sind und zusätzlich zu den Schraubverbindungen einen weiteren Formschluss bilden, um eine kompakte und stabile Verbindung der einzelnen Komponenten untereinander zu gewährleisten. Des Weiteren ist dem Adapterelement 9 und dem Gehäuse 2 der Verriegelungsvorrichtung 1, wie in Figur 1d dargestellt, beispielsweise ein als O-Ring ausgebildetes Dichtelement 26 zugeordnet, welches das Sperrglied 7 im Bereich des Adapterelements 9 teilweise umschließt, um den Innenraum des Gehäuses 2 der Verriegelungsvorrichtung 1 gegen Staub und Feuchtigkeit zu schützen.

Im vorliegenden Fall ist das aus einem Gummimaterial ausgebildete Dichtelement 26 formschlüssig an der Öffnung 10 des aus Kunststoff (PA, PBT) ausgebildeten Adapterelements 9 und an einer zur Durchführung des Sperrglieds 7 dienenden Öffnung 27 des Gehäuses 2 der Verriegelungsvorrichtung 1 zur Führung des Sperrglieds 7 angeordnet. Dabei durchsetzt das Dichtelement 26 sowohl die Öffnung 27 des Gehäuses 2, als auch die Öffnung 10 des Adapterelements 9. Das Dichtelement 26 wird formschlüssig durch diese Öffnung 10,27 gehalten, so dass bei einer Bewegung des Sperrglieds 7 von der Entriegelungsstellung in die Verriegelungsstellung und umgekehrt eine Verschiebung des Dichtelements 26 ausgeschlossen ist. Zusätzlich kann noch ein Anteil von Schmierfett zwischen Dichtelement 26 und Sperrglied 7 angeordnet werden, um die Reibungskräfte zwischen diesen beiden Bauteilen 26, 7 zu minimieren.

Alternativ kann dass Dichtelement auch stoffschlüssig, insbesondere im 2K-Verfahren, an der Öffnung 10 des Adapterelements 9 und/oder an der zur Durchführung des Sperrglieds 7 dienenden Öffnung 27 des Gehäuses 2 der Verriegelungsvorrichtung 1 verbunden werden.

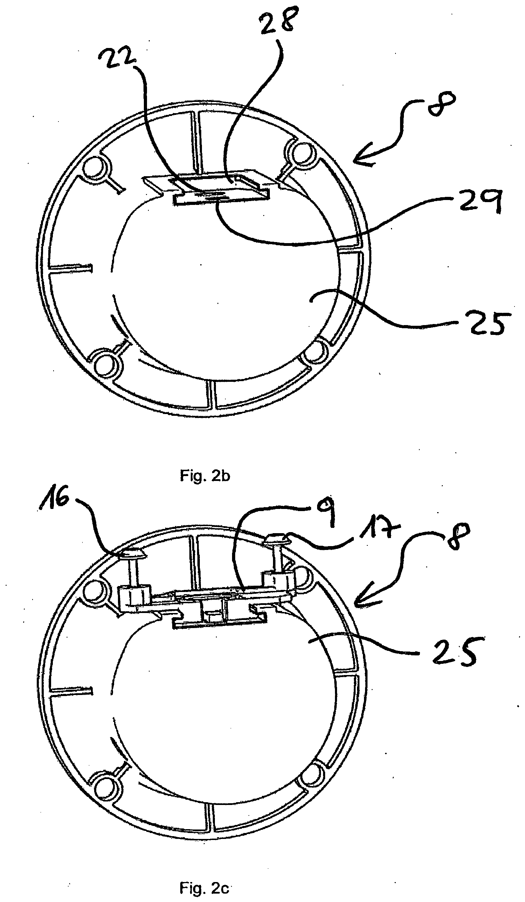

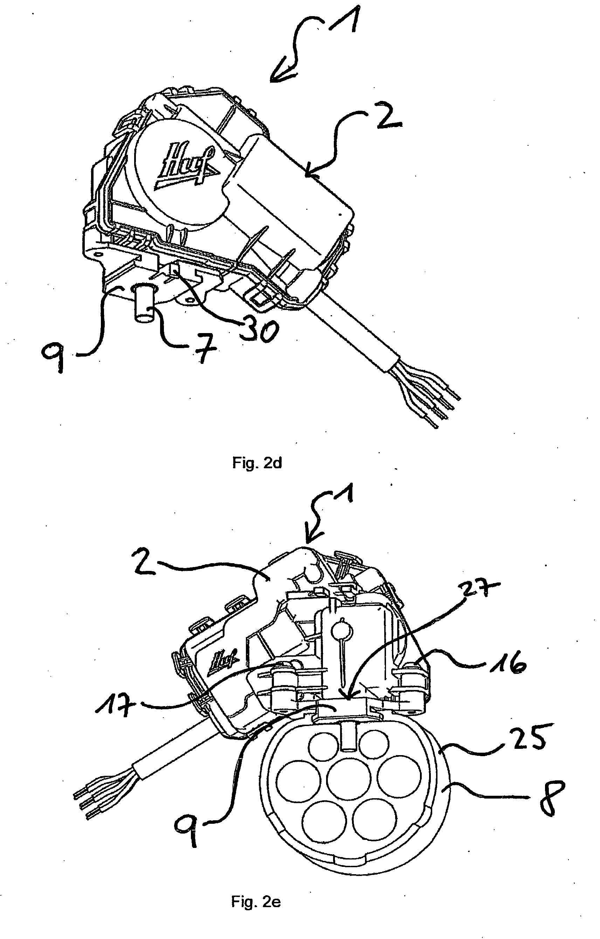

In den Figuren 2a bis 2e ist das zweite Ausführungsbeispiel der Erfindung dargestellt. Die Bezugsziffern wurden für die einzelnen Bauteile beibehalten. Das zweite Ausführungsbeispiel unterscheidet sich von dem ersten Ausführungsbeispiel dadurch, dass beim den Adapterelement 9 auf die in dem ersten Ausführungsbeispiel beschriebenen Gewindebohrungen 18, 19 verzichtet wird. Durch diese vorteilhafte Ausgestaltung werden die Schrauben 23,24 (siehe Figur 1c, 1e) eingespart, weil das Adapterelement 9 mittels einer formschlüssigen und kraftschlüssigen Verbindung mit dem Gehäuse 25 der Ladesteckdose 8 verbunden wird. Dazu weist die Ladesteckdose 8 in Figur 2b eine als Aufnahme ausgebildete Nut 28 auf und das Adapterelement 9 eine Grundplatte 31, wobei im eingeschobenen Zustand des Adapterelements 9 die Nut 28 die Grundplatte 31 teilweise umgibt, so das eine formschlüssige und kraftschlüssige Verbindung entsteht. Dabei weist die am Adapterelement 9 vorgesehene Grundplatte 31 eine zur Nut 28 im Wesentlichen komplementäre Fläche auf. Zusätzlich ist in der Nut 28 eine Aufnahme 29 vorgesehen, welche beim Einschieben des Adapterelements 9 dazu dient, einem am Adapterelement 9 angeordnet Haken 30 aufzunehmen, um somit das Adapterelement 9 im Sinne einer Klipsverbindung zusätzlich gegen ein Herausfallen aus der Nut 28 zu sichern. Man kann natürlich auch auf diese Klipsverbindung verzichten, wenn man eine Presspassung zwischen Nut 28 und Adapterelement 9 vorsieht, wobei man in diesem Fall sowohl eine kraftschlüssige als auch eine formschlüssige Verbindung zwischen den Bauteilen herstellen würde. Ebenfalls wäre es denkbar, das Adapterelement 9 in die Nut 28 einzukleben, so dass man eine Kombination aus einer stoffschlüssigen als auch formschlüssigen Verbindung hätte. Die Verbindung des Adapterelements 9 mit dem Gehäuse 2 der Verriegelungsvorrichtung 1 erfolgt genauso, wie es im ersten Ausführungsbeispiel zuvor beschrieben ist.

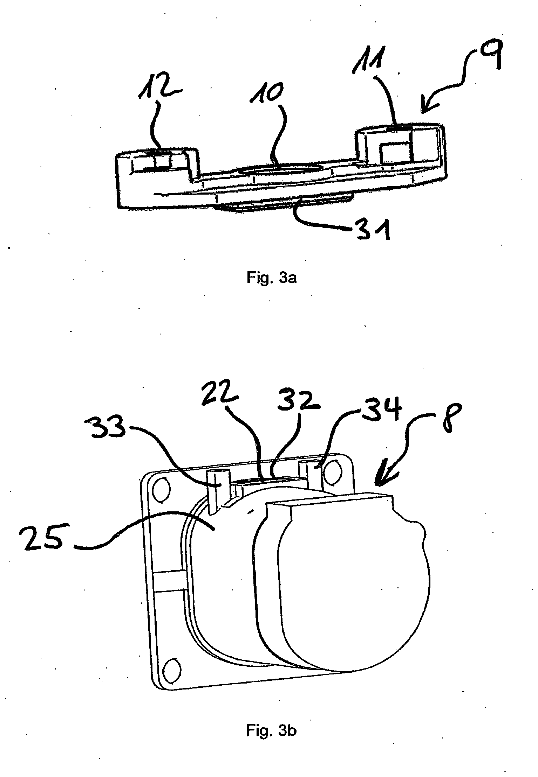

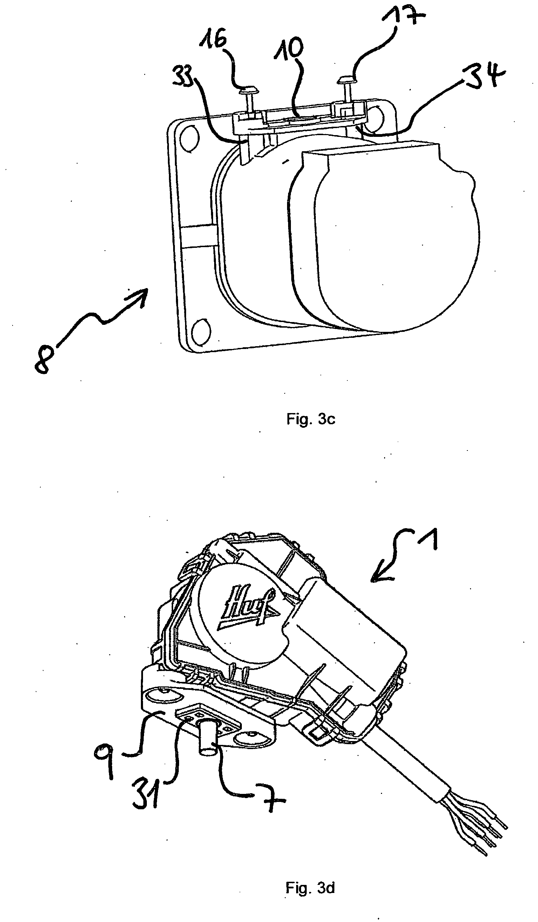

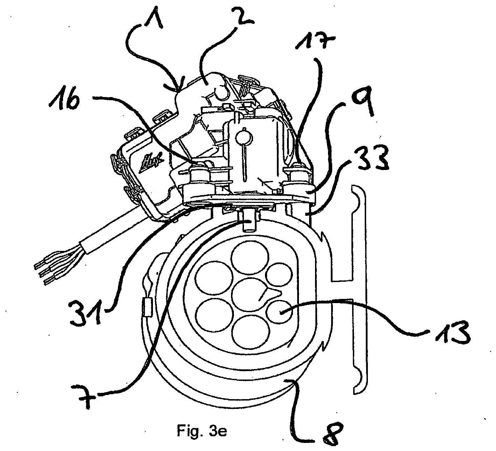

In den Figuren 3a bis 3e ist das dritte Ausführungsbeispiel der Erfindung dargestellt. Die Bezugsziffern wurden für die einzelnen Bauteile beibehalten. Das dritte Ausführungsbeispiel unterscheidet sich von dem zweiten Ausführungsbeispiel dadurch, dass auf eine Klipsverbindung zwischen dem Adapterelement 9 und dem Gehäuse 25, insbesondere der Nut 28 der Ladesteckdose 8 verzichtet worden ist. Zusätzlich wurde im Vergleich zum ersten Ausführungsbeispiel bei dem Adapterelement 9 gemäß dem dritten Ausführungsbeispiel auf die Gewindebohrungen 23, 24 verzichtet. Bei dem in Figur 3a visualisierten Adapterelement 9 sind lediglich zwei Gewindebohrungen 11,12 sowie die Grundplatte 31 vorgesehen. Die in Figur 3b dargestellte Ladesteckdose 8 weist eine zu der Grundplatte 31 komplementär angeordnete Aufnahme, insbesondere Plattenaufnahme 32 auf. Ferner sind auf dem Gehäuse 25 der Ladesteckdose 8 zwei domartige Gewindebohrungen 33, 34 angeordnet, welche senkrecht zu den Einstecköffnungen 13 der Ladesteckdose 2 angeordnet sind. Das Gehäuse 2 der Verriegelungsvorrichtung 1 weist, wie bereits in den anderen Ausführungsbeispielen zuvor beschrieben, ebenfalls zwei senkrecht zu den Einstecköffnungen 13 angeordnete Gewindebohrungen 14, 15 auf. Im vorliegenden Fall werden das Gehäuse 2 der Verriegelungsvorrichtung 1, das Adapterelement 9 und das Gehäuse 25 der Ladesteckdose 8 mit nur zwei Schrauben 16, 17 miteinander verbunden. Dies ist möglich, weil im dritten Ausführungsbeispiel alle Gewindebohrungen der einzelnen Bauteile 1, 8, 9 fluchtend zueinander angeordnet sind. Durch diese Maßnahme gelingt es in vorteilhafter Weise, die Anzahl der Schrauben zu reduzieren. Die Grundplatte 31 des Adapterelements 9 dient lediglich dazu beim Schraubvorgang das Adapterelement 9 in der Ladesteckdose 8 im Sinne einer Nut-Feder-Verbindung formschlüssig zu fixieren, um die Montage zu erleichtern. Des Weiteren ist es denkbar, an der Grundplatte 31 eine umlaufende Dichtung 26 anzuordnen.

Allgemein ist es natürlich möglich, das Adapterelement 9 ausschließlich durch eine stoffschlüssige Verbindung, beispielsweise durch eine Klebeverbindung mit einem Kleber oder durch Laserschweißen, mit dem Gehäuse 2 der Verriegelungsvorrichtung 1 und/oder mit dem Gehäuse 25 der Ladesteckdose 8 zu verbinden.

Generell ist es möglich, das Adapterelement 9 seitlich beabstandet zu der Durchführung 27 für das Sperrglied 7 am Gehäuse 2 der Verriegelungsvorrichtung 1 anzuordnen. Dann kann auch auf die Öffnung 10 des Adapterelements 9 verzichtet werden, weil eine Durchführung des Sperrglieds 7 durch das Adapterelement 9 nicht mehr erforderlich ist.

In der Figur 4 und 4a ist ein nicht erfindungsgemäßes Adapterelement 9' gezeigt, welches am als Bolzen ausgebildeten Sperrglied 7 angeordnet ist. An das Adapterelement 9' könnte beispielsweise ein weiteres Sperrglied 7 angeordnet werden, um das Sperrglied zur Verriegelung des Ladesteckers zu verlängern. Es könnten allerdings auch mechanische Einheiten, wie beispielsweise eine Kniehebelmechanik mit einem zusätzlichen Sperrglied 7 angeordnet werden, wenn aufgrund eines verzweigten Bauraums zu wenig Platz zur Anordnung der Verriegelungsvorrichtung 1 zur Verfügung steht. Das Adapterelement 9' ist im vorliegenden Fall mittels einer kraftschlüssigen Verbindung mit dem Sperrglied 7 verbunden, wobei auch formschlüssige Verbindung oder auch kraftschlüssige Verbindungen möglich sind. Denkbar sind deshalb Schraubverbindungen, Stiftverbindung und Klebstoffverbindungen, um das Adapterelement 9' mit dem Sperrglied 7 zu verbinden.

Des Weiteren weist die Verriegelungsvorrichtung 1 noch ein nicht erfindungsgemäßes Adapterelement 9" auf, welches zur Führung eines Notentriegelungselements 35 dient. Das als Bowdenzug ausgebildete Notentriegelungselement 35 gehört zu einer Notentriegelungseinheit, welche vom Benutzer bedient werden kann, wenn der Elektromotor ausfällt. In diesem Fall zieht der Benutzer an dem Bowdenzug und kann mit seiner Kraft das Sperrglied 7 aus dem Ladestecker ziehen. Das Adapterelement 9" ist im vorliegenden Fall mittels einer kraftschlüssigen Verbindung mit dem Gehäuse 2 verbunden, wobei auch formschlüssige Verbindung oder auch kraftschlüssige Verbindungen möglich sind. Denkbar sind deshalb Schraubverbindungen, Stiftverbindung und Klebstoffverbindungen, um das Adapterelement 9" mit dem Gehäuse 2 zu verbinden.

In der Figur 5 ist noch ein zu Figur 4 alternatives u-förmig ausgebildetes Adapterelement 9" und eine als Kniehebelantrieb ausgebildete mechanische Einheit 36 dargestellt, welche mit einem nicht näher gezeigten Adapterelement 9' verbunden ist.

Die in den Ausführungsbeispielen dargestellten Merkmale können selbstverständlich auch untereinander kombiniert werden, so dass beispielsweise auch in dem zweiten und dritten Ausführungsbeispiel das Dichtelement 26 verwendet werden kann.

### Bezugszeichenliste

- 1: Verriegelungsvorrichtung
- 2: Gehäuse Verriegelungsvorrichtung
- 3: Oberschale
- 4: Unterschale
- 5: Kennzeichnungsfläche
- 6: Elektromotor
- 7: Sperrglied
- 8: Ladesteckdose
- 9: Adapterelement
- 9': Adapterelement für Sperrglied
- 9": Adapterelement für Notentriegelung
- 10: Öffnung Adapterelement
- 11: erste Gewindebohrung
- 12: zweite Gewindebohrung
- 13: Einstecköffnung der Ladesteckdose
- 14: Gewindebohrungen Gehäuse Verriegelungsvorrichtung
- 15: Gewindebohrungen Gehäuse Verriegelungsvorrichtung
- 16: Schraube
- 17: Schraube
- 18: dritte Gewindebohrung
- 19: vierte Gewindebohrung
- 20: Gewindebohrung Ladesteckdose
- 21: Gewindebohrung Ladesteckdose
- 22: Öffnung Ladesteckdose
- 23: Schraube
- 24: Schraube
- 25: Gehäuse Ladesteckdose
- 26: Dichtelement
- 27: Öffnung im Gehäuse 2
- 28: Nut
- 29: Aufnahme in Nut 28
- 30: Haken am Adapterelement 9
- 31: Grundplatte
- 32: Plattenaufnahme der Ladesteckdose
- 33: domartige Gewindebohrung
- 34: domartige Gewindebohrung
- 35: Notentriegelungselement
- 36: mechanische Einheit

## Patentansprüche

1. Verriegelungsvorrichtung (1) für einen Ladestecker eines elektrisch angetriebenen Kraftfahrzeugs, welcher in eine am Kraftfahrzeug und/oder an einer Ladesäule angeordnete Ladesteckdose (8) einsteckbar ist, wobei die Ladesteckdose (8) mittels eines Adapterelements (9) mit einem Gehäuse (2) der Verriegelungsvorrichtung verbindbar ist, **dadurch gekennzeichnet, dass** das Adapterelement (9) kraftschlüssig und formschlüssig mit dem Gehäuse (25) der Ladesteckdose (8) verbindbar ist, wobei das Adapterelement (9) mit dem Gehäuse (2) der Verriegelungsvorrichtung (1) mit mindestens einer Schraube (16, 17) verschraubbar ist.

2. Verriegelungsvorrichtung (1) nach Anspruch 1, **dadurch gekennzeichnet, dass** die Verriegelungsvorrichtung (1) ein Gehäuse (2) mit mindestens einer Öffnung (27) aufweist, in welchem ein mechanisch und/oder elektrisch zu betätigendes Sperrglied (7) zumindest teilweise angeordnet ist.

3. Verriegelungsvorrichtung (1) nach Anspruch 1 oder 2, **dadurch gekennzeichnet, dass** der Verriegelungsvorrichtung (1) ein Elektromotor (6) zugeordnet ist, welcher innerhalb des Gehäuses (2) angeordnet ist und zum Antreiben des Sperrglieds (7) dient.

4. Verriegelungsvorrichtung (1) nach Anspruch 1, **dadurch gekennzeichnet, dass** das Adapterelement (9) und/oder das Gehäuse (25) des Ladesteckers (8) jeweils zumindest zwei Gewindebohrungen (18, 19, 20, 21) aufweisen.

5. Verriegelungsvorrichtung (1) nach Anspruch 4,**dadurch gekennzeichnet, dass** die Gewindebohrungen (18, 19, 20, 21) senkrecht und/oder parallel zu Einstecköffnungen (13) der Ladesteckdose (8) angeordnet sind.

6. Verriegelungsvorrichtung (1) nach einem der Ansprüche 1 bis 3, **dadurch gekennzeichnet, dass** das Adapterelement (9) mit dem Gehäuses (25) der Ladesteckdose (8) verklipsbar ist.

7. Verriegelungsvorrichtung (1) nach einem der Ansprüche 1 bis 3, dass das Adapterelement (9) in eine Nut (28) des Gehäuses (25) der Ladesteckdose (8) eingeschoben wird.

8. Verriegelungsvorrichtung (1) nach Anspruch 7, **dadurch gekennzeichnet, dass** innerhalb der Nut eine Aufnahme vorgesehen ist, die bei eingeschobenen Adapterelement (9) einen am Adapterelement angeordneten Haken (30) aufnimmt.

9. Verriegelungsvorrichtung (1) einem der Ansprüche 1 bis 3, **dadurch gekennzeichnet, dass** das Adapterelement (9) eine zur Nut (28) des Gehäuses (25) der Ladesteckdose (8) im Wesentlichen komplementäre Flache aufweist, welche mit der Nut (28) einen Formschluss bildet.

10. Verriegelungsvorrichtung (1) nach Anspruch 2 oder 3, **dadurch gekennzeichnet, dass** dem Adapterelement (9) und/oder dem Gehäuse (2) der Verriegelungsvorrichtung (1) mindestens ein Dichtelement (26) zugeordnet ist, welches das Sperrglied (7) zumindest teilweise umschließt.

11. Verriegelungsvorrichtung (1) nach Anspruch 10, **dadurch gekennzeichnet, dass** das Dichtelement (26) formschlüssig oder stoffschlüssig, insbesondere im 2K-Verfahren, an einer Öffnung (10) des Adapterelements (9) und/oder an einer Öffnung (27) des Gehäuses (2) der Verriegelungsvorrichtung (1) zur Führung des Sperrglieds (7) verbunden ist.

12. Verriegelungsvorrichtung (1) nach Anspruch 2 oder 3, **dadurch gekennzeichnet, dass** das Adapterelement (9) eine Öffnung (10) aufweist, welche zur Führung des Sperrglieds (7) dient.

## Claims

1. Locking device (1) for a charging plug of an electrically driven motor vehicle, which can be inserted in a charging socket (8) located on the motor vehicle and/or on a charging station, wherein the charging socket (8) is connectible to a housing (2) of the locking device (1) by means of an adapter element (9), **characterized in that** the adapter element (9) is connectible to the housing (25) of charging socket (8) in non-positive and positive locking manner, wherein the adapter element (9) can be screwed together with housing (2) of the locking device (1) with at least one screw (16, 17).

2. Locking device (1) according to Claim 1, **characterized in that** the locking device (1) comprises a housing (2) having at least one opening (27), in which at least a part of a mechanically and/or electrically operable blocking member (7) is arranged.

3. Locking device (1) according to Claim 1 or 2, **characterized in that** an electric motor (6) which is arranged inside the housing (2) and serve to dirve the blocking member (7) is associated with the locking device (1).

4. Locking device (1) according to Claim 1, **characterized in that** the adapter element (9) and/or the housing (25) of the charging plug (8) each have at least two threaded drillholes (18, 19, 20, 21).

5. Locking device (1) according to Claim 4, **characterized in that** the threaded drillholes (18, 19, 20, 21) are arranged perpendicularly and/or parallel to the insertion openings (13) in the charging socket (8).

6. Locking device (1) according to any one of Claims 1 to 3, **characterized in that** the adapter element (9) can be clipped to the housing (25) of the charging socket (8).

7. Locking device (1) according to any one of Claims 1 to 3, **characterized in that** the adapter element (9) is inserted in a groove (28) in the housing (25) of the charging socket (8).

8. Locking device (1) according to Claim 7, **characterized in that** a seating is provided inside the groove, which seating accommodates a hook (30) arranged on the adapter element when the adapter element (9) is pushed in.

9. Locking device (1) according to any one of claims 1 to 3, **characterized in that** the adapter element (9) has a surface that is substantially complementary to the groove (28) in the housing (25) of the charging socket (8), which surface forms a positive locking connection with the groove (28).

10. Locking device (1) according to Claim 2 or 3, **characterized in that** at least one sealing element (26) which at least partially surrounds the blocking member (7) is assigned to the adapter element (8) and/or to the housing (2) of the locking device (1).

11. Locking device (1) according to Claim 10, **characterized in that** the sealing element (26) is connected to an opening (10) of the adapter element (9) and/or to an opening (27) in the housing (2) of the locking device (1) in positive locking manner or materially bonded manner, particularly in a 2-component process, for guiding the blocking member (7).

12. Locking device (1) according to Claim 2 or 3, **characterized in that** the adapter element (9) has an opening (10) which serves to guide the blocking member (7)

## Revendications

1. Dispositif de verrouillage (1) pour un connecteur de charge d'un véhicule à propulsion électrique, lequel peut être connecté dans une prise de charge (8) disposée dans une colonne de charge, la prise de charge (8) pouvant être reliée au moyen d'un élément adaptateur (9) à un boîtier (2) du dispositif de verrouillage, **caractérisé en ce que** l'élément adaptateur peut être relié par conformité de force et conformité de forme au boîtier (25) de la prise de charge (8), l'élément adaptateur (9) pouvant être vissé avec au moins une vis (16,17) au boîtier (2) du dispositif de verrouillage (1).

2. Dispositif de verrouillage (1) selon la revendication 1, **caractérisé en ce que** le dispositif de verrouillage (1) comporte un boîtier (2) avec au moins une ouverture (27) dans lequel est disposé au moins en partie un relais de verrouillage (7) à actionnement mécanique et/ou électrique.

3. Dispositif de verrouillage (1) selon la revendication 1 ou 2, **caractérisé en ce qu'**un moteur électrique (6) est attribué au dispositif de verrouillage (1), lequel est disposé à l'intérieur du boîtier (2) et sert à entraîner le relais de verrouillage (7).

4. Dispositif de verrouillage (1) selon la revendication 1, **caractérisé en ce que** l'élément adaptateur (9) et/ou le boîtier (25) du connecteur de charge (8) comportent respectivement au moins deux trous filetés (18,19,20,21).

5. Dispositif de verrouillage (1) selon la revendication 4, **caractérisé en ce que** les trous filetés (18,19,20,21) sont disposés perpendiculairement et/ou parallèlement aux ouvertures de connexion (13) de la prise de charge (8).

6. Dispositif de verrouillage (1) selon l'une quelconque des revendications 1 à 3, **caractérisé en ce que** l'élément adaptateur (9) peut être clipsé avec le boîtier (25) de la prise de charge (8).

7. Dispositif de verrouillage (1) selon l'une quelconque des revendications 1 à 3, **caractérisé en ce que** l'élément adaptateur (9) est glissé dans une rainure (28) du boîtier (25) de la prise de charge (8).

8. Dispositif de verrouillage (1) selon la revendication 7, **caractérisé en ce qu'**un logement est prévu à l'intérieur de la rainure, qui reçoit un crochet (30) disposé sur l'élément adaptateur lorsque l'élément adaptateur (9) est introduit.

9. Dispositif de verrouillage (1) selon l'une quelconque des revendications 1 à 3, **caractérisé en ce que** l'élément adaptateur (9) comporte une surface pour l'essentiel complémentaire à la rainure (28) du boîtier (25) de la prise de charge (8), laquelle forme une conformité de forme avec la rainure (28).

10. Dispositif de verrouillage (1) selon la revendication 2 ou 3, **caractérisé en ce qu'**au moins un élément d'étanchéification (26) est attribué à l'élément adaptateur et/ou au boîtier (2) du dispositif de verrouillage (1), lequel enveloppe au moins en partie le relais de verrouillage (7).

11. Dispositif de verrouillage (1) selon la revendication 10, **caractérisé en ce que** l'élément d'étanchéité (26) est relié par conformité de forme ou conformité de matériau, en particulier dans le procédé à deux composants, à une ouverture (10) de l'élément adaptateur (9) et/ou à une ouverture (27) du boîtier (2) du dispositif de verrouillage (1) pour guider le relais de verrouillage (7).

12. Dispositif de verrouillage (1) selon la revendication 2 ou 3, **caractérisé en ce que** l'élément adaptateur (9) comporte une ouverture (10), qui sert au guidage du relais de verrouillage (7).
